# EUROPEAN PATENT SPECIFICATION

(11) **EP 1 826 234 B1**
(45) Date of publication and mention of the grant of the patent: **06.06.2012**
(21) Application number: 07103073.8
(22) Date of filing: 26.02.2007
(51) Int. Cl.: C08K 3/36, C08K 5/06, C08L 21/00, B60C 1/00

(54) **Curable rubber mix containing silica**
Härtbare Kautschukmischung, die Silica enthält
Mélange de caoutchouc durcissable contenant de la silice

(30) Priority: 27.02.2006 IT TO20060139
(43) Date of publication of application: 29.08.2007
(73) Proprietor: Bridgestone Corporation, Tokyo 104-8340 (JP)
(72) Inventor: Di Ronza, Raffaele, 00146, Roma (IT)
(74) Representative: Jorio, Paolo

(56) References cited:
- EP-A- 0 950 679
- WO-A-2005/068534
- JP-A- 2 300 211
- US-A1- 2001 031 822

## Description

The present invention relates to a curable rubber mix containing silica, for producing tyres. More specifically, the present invention relates to a mix for producing tread compounds.

Here and hereinafter:
- the term "silica" is intended to mean a silicon dioxide-based reinforcing agent;
- the term "cross-linkable unsaturated-chain polymer base" is intended to mean any natural or synthetic non-cross-linked polymer capable of assuming all the chemical-physical and mechanical characteristics typically assumed by elastomers when cross-linked (cured) with sulphur-based systems; and
- the term "polyether-polyol compound" is intended to mean a polymer comprising a number of ether groups and hydroxyl groups.

In the making of tyre tread compound mixes, reinforcing fillers are used, in which carbon black has been partly or entirely replaced with inorganic reinforcing agents such as chalk, talc, kaolin, bentonite, titanium dioxide, silicates of various types, and, above all, silica, to minimize the rolling resistance of the tyre.

Mixes containing silica as the reinforcing agent pose processing problems, on account of the relatively high viscosity of the mix.

Such problems are further emphasized in the case of mixes for producing passenger car tyre tread compounds, which normally contain a large amount of silica (at least 50% by weight of the total amount of reinforcing filler).

To counteract the silica-induced increase in viscosity, silica "activating" compounds - whose structure comprises a number of ether groups and hydroxyl groups, and which are referred to hereinafter as polyether-polyol compounds - are known to be added to the mix. Despite improvements in terms of the viscosity of the mix, and therefore ease of processing, silica-activating compounds also have the drawback of possibly modifying other properties of the mix, such as the Storage Dynamic modulus.

It is an object of the present invention to provide a curable, silica-containing rubber mix, which is relatively easy to process, but without modifying other properties of the mix.

According to the present invention, there is provided a curable rubber mix comprising a cross-linkable unsaturated-chain polymer base; a curing system; and a reinforcing filler system comprising at least 50% by weight of silica; said curable rubber mix being characterized in that said reinforcing filler system comprises a polyether-polyol compound of formula I, CH(CH₂(OCH₂CH₂)₂OH)₃

R in the compound is preferably H.

The molecular weight is preferably 250 to 350.

The mix preferably contains 1 to 5 parts by weight, and more preferably 1.5 to 2.5 parts by weight, of polyether-polyol compound I per 100 parts of polymer base.

Further characteristics of the present invention will be made clear in the following description of a number of purely non-limiting examples.

### EXAMPLES

Below are described examples of a mix (mix A) produced in accordance with the teachings of the present invention; a first comparison mix (mix B) containing no polyether-polyol compound; a second and third comparison mix (mix C and mix D) containing two respective polyether-polyol compounds not of formula I.

The example mixes described are produced as described below:

### - mix preparation -

### (1st mixing step)

Prior to commencing the mixing operation, a 237-270-litre tangential mixer is loaded with the cross-linkable polymer base, carbon black, silica, a silane bonding agent, zinc oxide, stearic acid, wax, antioxidants, and the polyether-polyol compound, to a fill factor of 66-72%.

The mixer is operated at a speed of 40-60 rpm, and the resulting mix is dumped reaching a temperature of 140-160°C.

### (2nd mixing step)

The mix from the preceding step is mixed again in a mixer operated at a speed of 40-60 rpm, and is then dumped reaching a temperature of 130-150°C.

### (3rd mixing step)

The curing system is added to the mix from the preceding step, to reach a fill factor of 63-67%.

The mixer is operated at a speed of 20-40 rpm, and the resulting mix is dumped reaching a temperature of 100-110°C.

### - mix composition -

Table I shows the compositions of the mixes produced using the method described above. The component quantities are expressed in parts by weight per 100 parts of total polymer base.

**TABLE I**

| | Mix A | Mix B | Mix C | Mix D |
|---|---|---|---|---|
| SBR | 80 | 80 | 80 | 80 |
| Polybutadiene | 20 | 20 | 20 | 20 |
| Silica | 70 | 70 | 70 | 70 |
| Carbon black | 10 | 10 | 10 | 10 |
| Silane bonding agent | 7 | 7 | 7 | 7 |
| Stearic acid | 2 | 2 | 2 | 2 |
| Zinc oxide | 2.5 | 2.5 | 2.5 | 2.5 |
| Antioxidant | 3 | 3 | 3 | 3 |
| Wax | 1.5 | 1.5 | 1.5 | 1.5 |
| Sulphur | 1.75 | 1.75 | 1.75 | 1.75 |
| Accelerators | 3.0 | 3.5 | 3.0 | 3.0 |
| Polyether-polyol compound | 2 | 0 | 2 | 2 |

The polyether-polyol compound used in mix A is of formula CH(CH₂(OCH₂CH₂)₂OH)₃.

The polyether-polyol compounds used in mixes C and D have structures of other than formula I as it is described below:
the polyether-polyol compound of mix C is of formula CH(CH₂(OCH(CH₃)CH₂)₂OH)₃; and
the polyether-polyol compound of mix D is of formula RCHCHR, where R is CH₂OCH₂CH(CH₃)OCH₂C(CH₃) (OH).

### - laboratory test results of mixes A, B, C, D -

The resulting mixes were tested to determine the values of various particularly significant parameters of each mix.

Table II shows the results of each parameter for each mix.

The parameters considered are the following:
- viscosity (ML1'+4' at 130°C), measured in accordance with ASTM standard D1646;
- rheometric values (t'10, t'90), measured in accordance with ASTM standard D2084;
- physical property values (ultimate elongation EB%, fracture strength TB, modulus M100% and M300% values), measured in accordance with ASTM standard D412C; and
- Storage Dynamic modulus (E'), measured in accordance with ASTM standard D5992.

The values in Table II refer to value 100 of mix B.

**TABLE II**

| | MIX A | MIX B | MIX C | MIX D |
|---|---|---|---|---|
| ML1'+4' at 130°C | 85 | 100 | 87 | 87 |
| t'10 | 100 | 100 | 100 | 85 |
| t'90 | 100 | 100 | 90 | 90 |
| TB | 102 | 100 | 102 | 101 |
| EB(%) | 100 | 100 | 100 | 97 |
| M100% | 101 | 100 | 101 | 101 |
| M300% | 100 | 100 | 102 | 102 |
| E' at 30°C | 100 | 100 | 80 | 85 |

As shown in Table II, mix A according to the invention has a much better viscosity value than mix B containing no polyether-polyol compound, while at the same time having a better Storage Dynamic modulus value than mixes C and D.

Though particularly significant, the other parameters in Table II are not commented on, by not varying to a great extent with respect to the comparison examples.

In short, curable rubber mixes comprising the polyether-polyol compound of formula I may be said to have better viscosity, while at the same time having no negative effect on the other parameters of the mix.

## Claims

1. A curable rubber mix comprising a cross-linkable unsaturated-chain polymer base; a curing system; and a reinforcing filler system comprising at least 50% by weight of silica; said curable rubber mix being **characterized in that** said reinforcing filler system comprises a polyether-polyol compound of formula I
CH(CH₂(OCH₂CH₂)₂OH)₃ (I)

2. A mix as claimed in Claim 1, wherein the compound of formula I is present in the amount of 1 to 5 parts by weight per 100 parts of polymer base.

3. A mix as claimed in Claim 2, wherein the compound of formula I is present in the amount of 1.5 to 2.5 parts by weight per 100 parts of polymer base.

4. A tread, **characterized by** being made from a mix as claimed in any one of the foregoing Claims.

5. A tire, **characterized by** comprising a tread as claimed in Claim 4.

6. Use of the polyether-polyol compound of formula I in curable rubber mixes for producing tyres
CH(CH₂(OCH₂CH₂)₂OH)₃ (I)

## Patentansprüche

1. Härtbares Kautschukgemisch, umfassend eine Basis aus vernetzbarem Polymer mit ungesättigten Ketten; ein Härtungssystem; und ein Verstärkungsfüllstoffsystem, umfassend mindestens 50 Gew.-% Silica; wobei das härtbare Kautschukgemisch **dadurch gekennzeichnet ist, dass** das Verstärkungsfüllstoffsystem eine Polyether-Polyol-Verbindung der Formel I umfasst
CH(CH₂(OCH₂CH₂)₂OH)₃ (I).

2. Gemisch nach Anspruch 1, wobei die Verbindung der Formel I in einer Menge von 1 bis 5 Gewichtsteilen pro 100 Teile Polymerbasis vorliegt.

3. Gemisch nach Anspruch 2, wobei die Verbindung der Formel I in einer Menge von 1,5 bis 2,5 Gewichtsteile pro 100 Teile Polymerbasis vorliegt.

4. Reifenprofil, **dadurch gekennzeichnet, dass** es aus einem Gemisch nach einem der vorangehenden Ansprüche hergestellt ist.

5. Reifen, **dadurch gekennzeichnet, dass** er ein Reifenprofil nach Anspruch 4 umfasst.

6. Verwendung der Polyether-Polyol-Verbindung der Formel I in härtbaren Kautschukgemischen zur Herstellung von Reifen.
CH(CH₂(OCH₂CH₂)₂OH)₃ (I)

## Revendications

1. Formulation de caoutchouc durcissable comprenant un polymère de base à chaîne insaturée réticulable ; un système de durcissement ; et un système de charge de renforcement comprenant au moins 50 % en poids de silice ; ladite formulation de caoutchouc durcissable étant **caractérisée en ce que** ledit système de charge de renforcement comprend un composé du type polyéther-polyol de formule I
CH(CH₂(OCH₂CH₂)₂OH)₃ (I)

2. Formulation suivant la revendication 1, dans laquelle le compose de formule I est présent en une quantité de 1 à 5 parties en poids pour 100 parties en poids de polymère de base.

3. Formulation suivant la revendication 2, dans laquelle le composé de formule I est présent en une quantité de 1,5 à 2,5 parties en poids pour 100 parties en poids de polymère de base.

4. Bande de roulement, **caractérisée en ce qu'**elle est préparée à partir d'une formulation suivant l'une quelconque des revendications précédentes.

5. Bandage pneumatique, **caractérisé en ce qu'**il comprend une bande de roulement suivant la revendication 4.

6. Utilisation du composé du type polyéther-polyol de formule I dans des formulations de caoutchoucs durcissables pour la production de bandages pneumatiques
CH(CH₂(OCH₂CH₂)₂OH)₃ (I)
